# EUROPEAN PATENT SPECIFICATION

(11) **EP 3 396 849 B1**
(45) Date of publication and mention of the grant of the patent: **17.03.2021**
(21) Application number: 18170106.1
(22) Date of filing: 30.04.2018
(51) Int. Cl.: H02P 9/14

(54) **IMPROVED GENERATOR OUTPUT VOLTAGE REGULATION**
VERBESSERTE GENERATORAUSGANGSSPANNUNGSREGULIERUNG
RÉGULATION AMÉLIORÉE DE LA TENSION DE SORTIE D'UN GÉNÉRATEUR

(30) Priority: 28.04.2017 US 201715581059
(43) Date of publication of application: 31.10.2018
(73) Proprietor: Hamilton Sundstrand Corporation, Charlotte, NC 28217-4578 (US)
(72) Inventor: EAKMAN, Kenneth J., Rockford, IL Illinois (US)
(74) Representative: Dehns

(56) References cited:
- US-A1- 2002 097 026
- US-A1- 2014 225 575
- US-A1- 2017 033 717
- US-B1- 7 441 137

## Description

### BACKGROUND

In present aerospace power generation systems generator voltage regulation is accomplished using precise measurement of the generator output voltage and modulation of the generator excitation currents. This is typically done by a Generator Control Unit which incorporates a Voltage Regulator. When large electrical loads are applied to the generator output terminals the voltage will rapidly decrease until the Generator Control Unit/Voltage Regulator applies additional excitation current, recovering the generator output voltage to the desired level. In this implementation the Generator Control Unit/Voltage Regulator is reacting to the drooping generator output voltage, after the electric load is applied. Conversely, when a large electrical load is removed the generator the output voltage will increase and the Generator Control Unit/Voltage Regulator decreases generator excitation to decrease the generator output voltage back to desired levels. In this example the voltage regulator is again reacting to the increased generator output voltage. These systems typically have power quality requirements that specify the upper and lower transient voltage limits that are permitted. Voltage regulation can be improved if the Generator Control Unit/Voltage Regulator can anticipate or prepare for the application or removal of electrical loads and the transient voltage limits can be more easily met. Generator output regulation is discussed in US 2002/097026, US 2017/033717 and US 7,441,137/

### BRIEF DESCRIPTION

In accordance with one or more embodiments, a method of altering a generator output voltage in anticipation of a change with respect to a specific electrical load is provided as defined in claim 1.

In accordance with an embodiment or the method embodiment above, implementing the change of the altered set point can include implementing a linear decay with respect to applying the matched generator output voltage.

In accordance with an embodiment or any of the method embodiments above, implementing the change of the altered set point can include implementing a linear increase with respect to removing the matched generator output voltage.

In accordance with an embodiment or any of the method embodiments above, a bus power control unit can receive a request to switch on the specific electrical load at a first time, and the specific electrical load can be required at an expected time.

In accordance with an embodiment or any of the method embodiments above, the bus power control unit can transmit communication signals to the generator control unit, and the generator control unit can receive the communication signals identifying the specific electrical load at a second time, and the first and second time can occur before the expected time.

In accordance with an embodiment or any of the method embodiments above, the communication signals from the bus power control unit can be responsive to a request to apply the specific electrical load.

In accordance with an embodiment or any of the method embodiments above, the communication signals from the bus power control unit can be responsive to a request to remove the specific electrical load.

In accordance with an embodiment or any of the method embodiments above, the bus power control unit can open and close the contactor in accordance with applying or removing the generator output voltage.

In accordance with an embodiment or any of the method embodiments above, the generator control unit can receive a request to switch on the specific electrical load at a first time, and the specific electrical load can be required at an expected time.

In accordance with an embodiment or any of the method embodiments above, the generator control unit can identify the specific electrical load at a second time, and the first and second time can occur before the expected time.

In accordance with one or more embodiment embodiments, a system of altering a generator output voltage in anticipation of a change with respect to a specific electrical load is provided as defined in claim 9.

In accordance with an embodiment or the system embodiment above, implementing the change of the altered set point can include implementing a linear decay with respect to applying the matched generator output voltage.

In accordance with an embodiment or any of the system embodiments above, implementing the change of the altered set point can include implementing a linear increase with respect to removing the matched generator output voltage.

In accordance with an embodiment or any of the system embodiments above, a bus power control unit can receive a request to switch on the specific electrical load at a first time, and the specific electrical load can be required at an expected time.

In accordance with an embodiment or any of the system embodiments above, the bus power control unit can transmit communication signals to the generator control unit, the generator control unit receives the communication signals identifying the specific electrical load at a second time, and the first and second time can occur before the expected time.

### BRIEF DESCRIPTION OF THE DRAWINGS

The following descriptions should not be considered limiting in any way. With reference to the accompanying drawings, like elements are numbered alike:
FIG. 1 depicts a system for an improved generator output voltage regulation in accordance with one or more embodiments;
FIG. 2 depicts a process flow for an improved generator output voltage regulation in accordance with one or more embodiments; and
FIG. 3 depicts a process flow for an improved generator output voltage regulation in accordance with one or more embodiments.

### DETAILED DESCRIPTION

A detailed description of one or more embodiments of the disclosed apparatus and method are presented herein by way of exemplification and not limitation with reference to the Figures.

Embodiments herein relate to a voltage regulator within a system that can increase a generator output voltage before large known loads are applied and decrease the generator output voltage before the large known loads are removed.

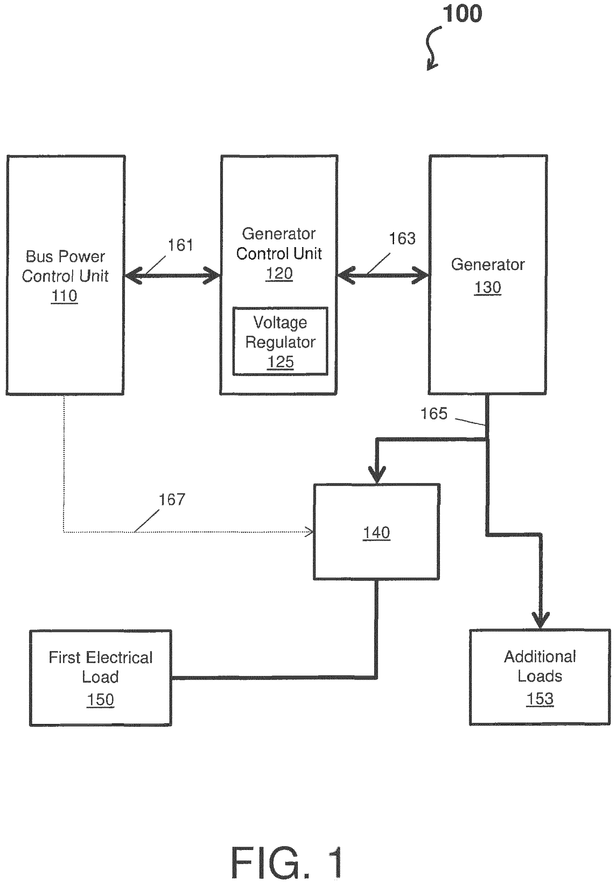

FIG. 1 depicts a system 100 in accordance with one or more embodiments. The system 100 comprises a bus power control unit (BPCU) 110 and generator control unit (GCU) 120 that includes a voltage regulator 125. The BPCU 110 and the GCU 120 can be processing units or components thereof that direct operations within the system 100.

The BPCU 110 and the GCU 120 can be implemented in hardware, software, and/or combination thereof, in combination with a memory (e.g., whether integrated or external to the processing units). The BPCU 110 and the GCU 120 can utilize arithmetic logic and/or program instructions (stored on the memory) to direct the operations within the system 100. Examples of the BPCU 110 and the GCU 120 can include, but are not limited to, digital signal processors, microcontrollers, microprocessor, system on chip designs, network on chips, field-programmable arrays, and the like. BPCU 110 and GCU 120 could also be integrated together into one unit and still function as described.

The system 100 further comprises a generator 130, a contactor 140, a first electrical load 150, and one or more additional loads 155. The generator 130 is an electro-mechanical device that converts mechanical energy to electrical energy for use in a circuit, such as the system 100. Examples of what propels the generator 130 can include, but are not limited to, aircraft engines, internal combustion engines, steam and gas turbines, and the like (e.g., a turbine, a gas engine, a diesel engine, a water turbine, etc. that produces shaft horsepower to drive the generator). The contactor 140 is an electrically controlled switch used for switching an electrical power circuit, such as the circuit between the generator 130 and the electrical load 150.

According to one or more embodiments, the BPCU 110 and the GCU 120 transfer communication signals 161 via a communication bus, while the GCU 120 and the generator 130 transfer control signals 163 via control wires. The generator 130 can further provide one or more outputs 165 via electrical wiring. As shown, the one or more outputs 165 can be provided to the first electrical load 150 via the contactor 140 and/or the one or more additional loads 155. Note that the BPCU 110 based on the control signal 167 can control the contactor 140.

The voltage regulator 125 of the GCU 120 is an electromechanical mechanism that regulates one or more AC or DC voltages of the generator 130. For example, the BPCU 110, which controls the electrical loads, can notify the voltage regulator 125 via the communication signals 161 (or other method) that a specific load is imminent. The voltage regulator 125 can, in response, increase the output voltage 165 in anticipation of the specific load. Similarly, the voltage regulator 125 can reduce the output voltage 165 in anticipation of the specific load removal.

In view of the system 100, it can be appreciated that, for alternating current (AC) loads controlled by the BPCU 110, the GCU 120, and/or other line replaceable units, the technical effects and benefits can include improved AC voltage regulation via the voltage regulator 125 (which also leads to improved DC bus voltage regulation), along with increased voltage regulator gains and phase margins. Further, embodiments herein and the technical effects and benefits thereof are not limited to that function being performed by the BPCU 110, the GCU 120, and/or other line replaceable units, as preparing for load applications or removals by altering the generator output voltage in anticipation of load changes can be performed by alternative hardware, software, and/or combinations thereof.

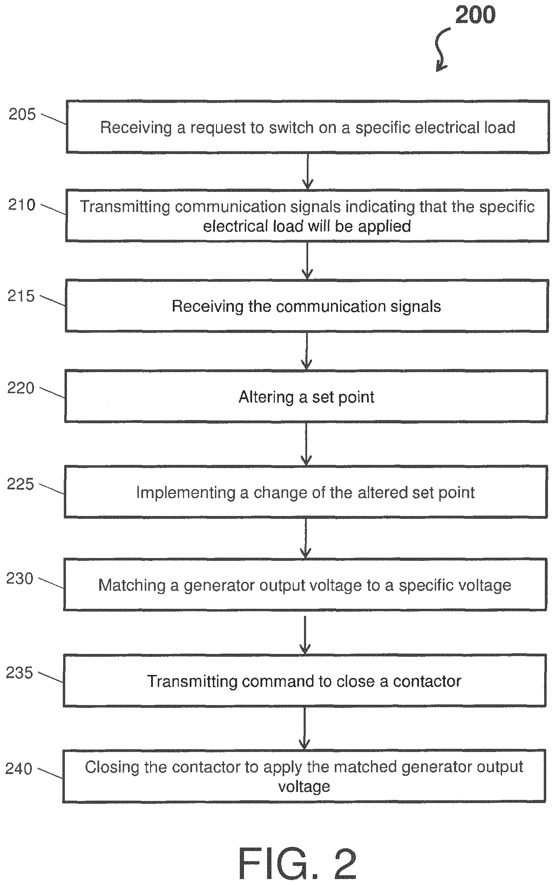

FIG. 2 depicts a process flow 200 for an improved generator output voltage regulation in accordance with an embodiment. The process flow 200 can generally be implemented by and/or within the system 100. The process flow 200 is described with respect to an aircraft implementation; however, embodiments herein are not limited thereto.

The process flow 200 begins at block 205, where the BPCU 110 receives a request to switch on a specific electrical load. The request can be received at a first time T1. In accordance with an embodiment, the first time T1 can be equal to zero (e.g., T1 = 0).

The request can be, for example, from a hydraulic system of the aircraft to switch on an electric motor driven hydraulic pump that has inrush current. The inrush current can be large enough to cause a generator output voltage (e.g., the output voltage 165 of the generator 130) to exceed transient voltage limits. For example, an application of the specific electrical load can cause the generator output voltage to dip from a nominal 115 Vrms to 70 Vrms, outside of the transient voltage limits.

At block 210, the BPCU 110 transmits communication signals indicating that the specific electrical load will be applied. The communication signals can be transmitted at a second time T2. In accordance with an embodiment, the second time T2 can be at 5 milliseconds (e.g., T2 = T1 + 5 milliseconds).

For instance, the BPCU 110 can notify the voltage regulator 125 of the GCU 120 via the communication signals 161 that the specific electrical load is imminent. In accordance with one or more embodiments, the communication signals indicate that the specific electrical load can be applied within an expected time TX (TX = T1 + X, where X can be 20 milliseconds).

At block 215, the GCU 120 receives communication signals. In this way, the GCU 120 receives a warning that the specific electrical load is imminent (e.g., receives a warning at 5 milliseconds that the specific electrical load is expected within the expected time TX). At block 220, the GCU 120 alters the generator output voltage set point. The GCU 120 can utilize the voltage regulator 125 to alter the set point in response to the warning from the BPCU 110. For instance, the voltage regulator 125 can change the set point to a set voltage 165 volts. At block 225, the GCU 120 can utilize the voltage regulator 125 to implement a change. The change can be a linear change (such as a linear decay of the set point), a nonlinear change, etc. In accordance with one or more embodiments, the GCU 120 linearly decays the set voltage at 300 volts/sec until normal set voltage of 115 Vrms is reached (e.g., can occur in less than 200 milliseconds). The voltage regulator 125 can implement the linear decay in response to the changing the set point.

At block 230, the generator control unit 120 and voltage regulator 125 matches the generator output voltage to a specific voltage (e.g., based on the set point) to produce a matched generator output voltage. The voltage regulator 125 of the GCU 120 rapidly increases generator excitation current that causes the generator output voltage of the generator 130 to rapidly increase (e.g., to 165 Vrms). Note that this rapid increase will occur in response to the increased set point. Also note that the rapid increase can occur at a third time T3. In accordance with an embodiment, the third time T3 can be at 10 milliseconds (e.g., T3 = T1 + 10- milliseconds). In accordance with one or more embodiments, increasing an excitation current to the generator can be performed without altering the set point, such as by altering the measured generator output voltage within the voltage regulator to cause an increase in the excitation current and the generator output voltage.

At block 235, the BPCU 110 transmits a command to close the contactor 140. The command can be received at a fourth time T4. In accordance with an embodiment, the fourth time T4 can be at 15 milliseconds (e.g., T4 = T1 + 15 milliseconds).

At block 240, the contactor 140 closes to apply the generator output voltage. The contactor 140 closes in response to the command of block 235. The contactor 140 can close at a fifth time T5, which can be in accordance with a delay between receiving the command and the actual closing. In accordance with an embodiment, the fifth time T5 can be at 30 milliseconds (e.g., T5 = T1 + 30 milliseconds). Note that the set voltage can be approximately 160 volts, when the contactor closes and the voltage droops. Further, because the load application starts at a higher voltage, the low end of the voltage transient requirement is not violated. In addition, when the set voltage has returned to 115 Vrms at a sixth time T6, normal operation of the system 100 can resume. In accordance with an embodiment, the sixth time T6 can be at 200 milliseconds (e.g., T6 = T1 + 200 milliseconds)

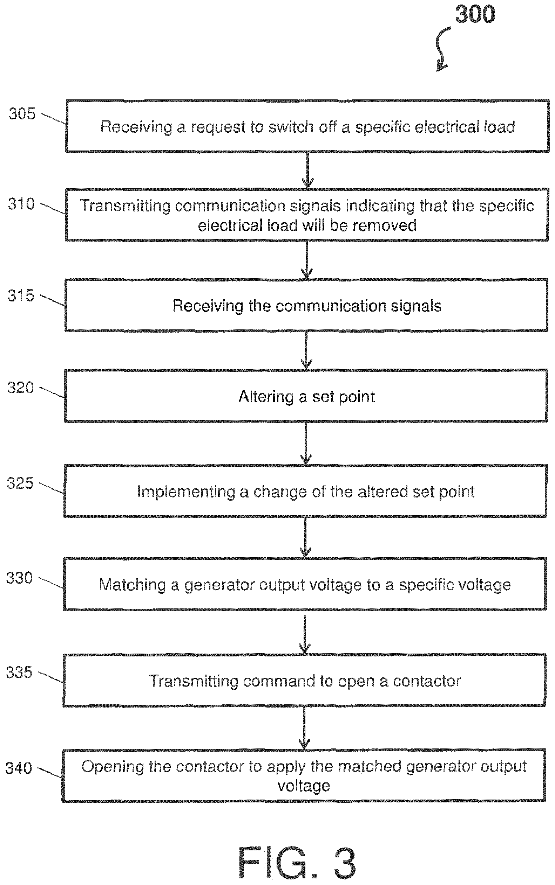

In view of the above, improved regulation for a specific electrical load removal can be accomplished in complementary manner by lowering the set point. Turning now to FIG. 3, a process flow 300 for an improved generator output voltage regulation is shown in accordance with an embodiment. The process flow 300 can generally be implemented by and/or within the system 100. The process flow 300 is described with respect to an aircraft implementation; however, embodiments herein are not limited thereto.

The process flow 300 begins at block 305, where the BPCU 110 receives a request to switch off a specific electrical load. The request can be received at a first time T1. In accordance with an embodiment, the first time T1 can be equal zero (e.g., T1 = 0). The request can be, for example, from a hydraulic system of the aircraft to switch off an electric motor driven hydraulic pump that will result in a rapid increase in generator output voltage.

At block 310, the BPCU 110 transmits communication signals indicating that the specific electrical load will be removed. The communication signals can be transmitted at a second time T2. In accordance with an embodiment, the second time T2 can be at 5 milliseconds (e.g., T2 = T1 + 5 milliseconds). For instance, the BPCU 110 can notify the voltage regulator 125 of the GCU 120 via the communication signals 161 that the removal of the specific electrical load is imminent. In accordance with one or more embodiments, the communication signals indicate that the specific electrical load can be removed within an expected time TX (TX = T1 + X, where X can be 20 milliseconds).

At block 315, the GCU 120 receives communication signals. At blocks 320 and 325, the GCU 120 alters a set point and utilizes the voltage regulator 125 to implement a change. The change can be a linear change (such as a gradual increase of the set point), a nonlinear change, etc. In accordance with one or more embodiments, the set point can be lowered to approximately 80 Vrms in anticipation of the specific electrical load removal. Further, the set point can then be gradually increased to 115 Vrms (such as over a time period of 200 milliseconds).

At block 330, the generator control unit 120 and voltage regulator 125 matches the generator output voltage to a specific voltage (e.g., based on the set point) to produce a matched generator output voltage. The voltage regulator 125 of the GCU 120 rapidly decreases generator excitation current that causes the generator output voltage of the generator 130 to rapidly decrease. In accordance with one or more embodiments, decreasing an excitation current to the generator can be performed without altering the set point, such as by altering the measured generator output voltage within the voltage regulator to cause a decrease in the excitation current and the generator output voltage.

At block 335, the BPCU 110 transmits a command to open the contactor 140. The command can be received at a fourth time T4. In accordance with an embodiment, the fourth time T4 can be at 15 milliseconds (e.g., T4 = T1 + 15 milliseconds). At block 340, the contactor 140 opens to remove the generator output voltage.

In accordance with one or more embodiments, specific timings and alterations can be calibrated with respect to applications and components within the aircraft. In this way, the system 100 can store and utilize multiple process flows for applying and/or removing specific electric loads based on the above process flows 200 and 300.

In accordance with one or more embodiments, the generator 130 can be driven by an auxiliary power unit or an aircraft turbine with respect to an increase throttle setting and/or pneumatic loads. Further, the GCU 120 can communicate to a full authority digital engine/electronics control (FADEC) instead of or in conjunction with the BPCU 110. Furthermore, the GCU 120 can communicate to an engine controller connected to an engine and/or to the BPCU 110 through a communication bus can. In the latter case, like with the voltage regulator, the BPCU 110 can instruct the engine controller to produce more power in anticipation of a specific load application or less power in anticipation of a specific load removal.

In accordance with one or more embodiments, the set voltage can be elevated and held until the contactor 140 actually closes or until after a specific time limit is exceeded. Once load is applied and voltage reached (or is near a set voltage), the ramp rate back to 115 Vrms can be accelerated. The amount of the ramp rate can depend on the closed loop damping of the voltage regulation.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A method of altering a generator output voltage in anticipation of a change with respect to a specific electrical load, the method **characterised by** comprising:
receiving, at a first time T1, by a bus power control unit BPCU (110), a request to switch on the specific electrical load comprising an inrush current to cause the generator output voltage to exceed a transient voltage limit;
transmitting, at a second time T2, by the bus power control unit communication signals indicating that the specific electrical load will be applied within an expected time TX;
receiving, at a generator control unit CGU (120), the communication signals indicating that the specific electrical load will be applied within an expected time TX;
altering, by a voltage regulator (125) of the generator control unit (120), a set point to produce an altered set point in response to the communication signals;
implementing, by the voltage regulator, a change of the altered set point;
matching the generator output voltage to the altered set point to produce a matched generator output voltage;transmitting, by the bus power control unit in communication with the generator control unit, a command to close a contactor (140); and
providing the matched generator output voltage to the specific electrical load (150) based on a closing operation of the contactor, the closing operation being in accordance with a delay between receiving the command and an actual closing and mitigating the inrush current.

2. The method of claim 1, wherein implementing the change of the altered set point includes implementing a linear increase with respect to removing the matched generator output voltage.

3. The method of any preceding claim, wherein the bus power control unit (110) receives a request to switch on the specific electrical load at the first time.

4. The method of claim 3,
wherein the generator control unit (120) receives the communication signals identifying the specific electrical load at the second time, and
wherein the first and second time occur before the expected time.

5. The method of claim 4, wherein the communication signals from the bus power control unit are responsive to a request to apply the specific electrical load.

6. The method of claim 4, wherein the communication signals from the bus power control unit are responsive to a request to remove the specific electrical load.

7. The method of claim 3, wherein the bus power control unit opens and closes the contactor (140) in accordance with applying or removing the generator output voltage.

8. The method of claim of any preceding claim, wherein the generator control unit identifies the specific electrical load at a second time, and
wherein the first and second time occur before the expected time.

9. A system of altering a generator output voltage in anticipation of a change with respect to a specific electrical load, the system **characterised by** comprising:
a generator control unit (120) comprising a voltage regulator (125);
a generator (130) ;
a bus power control unit (110) in communication with the generator control unit; and
a contactor (140) ,
wherein the bus power control unit is configured to receive, at a first time T1, a request to switch on the specific electrical load, the specific electrical load comprising an inrush current to cause the generator output voltage to exceed a transient voltage limit,
wherein the bus power control unit is configured to transmit, at a second time T2, communication signals indicating that the specific electrical load will be applied within an expected time TX,
wherein the generator control unit is configured to receive said communication signals indicating that the specific electrical load will be applied within an expected time TX;
wherein the voltage regulator of the generator control unit is configured to alter a set point to produce an altered set point in response to the communication signals,
wherein the voltage regulator of the generator control unit is configured to implement a change of the altered set point,
wherein the generator is configured to match the generator output voltage to the altered set point to produce a matched generator output voltage;
wherein the bus power control unit is configured to transmit a command to close the contactor; and
wherein the generator is configured to provide the matched generator output voltage to a specific electrical load based on a closing operation of the contactor, the closing operation being in accordance with a delay between receiving the command and an actual closing and mitigating the inrush current.

10. The system of claim 9, wherein implementing the change of the altered set point includes implementing a linear increase with respect to removing the matched generator output voltage.

11. The system of claim 9 or 10, wherein the bus power control unit receives a request to switch on the specific electrical load at the first time.

12. The system of claim 11,wherein the generator control unit receives the communication signals identifying the specific electrical load at the second time, and
wherein the first and second time occur before the expected time.

## Patentansprüche

1. Verfahren zum Ändern einer Generatorausgangsspannung in Erwartung einer Veränderung in Bezug auf eine bestimmte elektrischen Last, wobei das Verfahren **dadurch gekennzeichnet ist, dass** es Folgendes umfasst:
Empfangen, zu einer ersten Zeit T1, durch eine Sammelschienen-Leistungssteuerungseinheit BPCU (bus power control unit) (110), einer Anfrage, die bestimmte elektrische Last einzuschalten, was einen Einschaltstrom umfasst, um zu bewirken, dass die Generatorausgangsspannung eine vorübergehende Spannungsgrenze überschreitet;
Übertragen, zu einer zweiten Zeit T2, durch die Sammelschienen-Leistungssteuerungseinheit von Kommunikationssignalen, die angeben, dass die bestimmte elektrische Last innerhalb einer erwarteten Zeit TX angelegt wird;
Empfangen, an einer Generatorsteuerungseinheit CGU (generator control unit) (120), der Kommunikationssignale, die angeben, dass die bestimmte elektrische Last innerhalb einer erwarteten Zeit TX angelegt wird;
Ändern, durch einen Spannungsregulator (125) der Generatorsteuerungseinheit (120), eines Sollwerts, um einen geänderten Sollwert zu erzeugen, als Reaktion auf die Kommunikationssignale;
Umsetzen, durch den Spannungsregulator, einer Veränderung des geänderten Sollwerts;
Anpassen der Generatorausgangsspannung an den geänderten Sollwert, um eine angepasste Generatorausgangsspannung zu erzeugen; Übertragen, durch die Sammelschienen-Leistungssteuerungseinheit in Kommunikation mit der Generatorsteuerungseinheit, eines Befehls, einen Kontaktgeber (140) zu schließen; und
Bereitstellen der angepassten Generatorausgangsspannung für die bestimmte elektrische Last (150) basierend auf einem Schließvorgang des Kontaktgebers, wobei der Schließvorgang in Übereinstimmung mit einer Verzögerung zwischen dem Empfangen des Befehls und einem tatsächlichen Schließen und dem Abschwächen des Einschaltstroms erfolgt.

2. Verfahren nach Anspruch 1, wobei das Umsetzen der Veränderung des geänderten Sollwerts das Umsetzen eines linearen Anstiegs in Bezug auf das Entfernen der angepassten Generatorausgangsspannung beinhaltet.

3. Verfahren nach einem der vorstehenden Ansprüche, wobei die Sammelschienen-Leistungssteuerungseinheit (110) eine Anfrage, die bestimmte elektrische Last einzuschalten, zu der ersten Zeit empfängt.

4. Verfahren nach Anspruch 3,
wobei die Generatorsteuerungseinheit (120) die Kommunikationssignale, die die spezifische elektrische Last identifizieren, zu der zweiten Zeit empfängt, und wobei die erste und die zweite Zeit vor der erwarteten Zeit auftreten.

5. Verfahren nach Anspruch 4, wobei die Kommunikationssignale von der Sammelschienen-Leistungssteuerungseinheit auf eine Anfrage reagieren, die bestimmte elektrische Last anzulegen.

6. Verfahren nach Anspruch 4, wobei die Kommunikationssignale von der Sammelschienen-Leistungssteuerungseinheit auf eine Anfrage reagieren, die bestimmte elektrische Last zu entfernen.

7. Verfahren nach Anspruch 3, wobei die Sammelschienen-Leistungssteuerungseinheit den Kontaktgeber (140) in Übereinstimmung mit dem Anlegen oder Entfernen der Generatorausgangsspannung öffnet oder schließt.

8. Verfahren nach einem der vorstehenden Ansprüche, wobei die Generatorsteuerungseinheit die bestimmte elektrische Last zu einer zweiten Zeit identifiziert und wobei die erste und die zweite Zeit vor der erwarteten Zeit auftreten.

9. System zum Ändern einer Generatorausgangsspannung in Erwartung einer Veränderung in Bezug auf eine bestimmte elektrischen Last, wobei das System **dadurch gekennzeichnet ist, dass** es Folgendes umfasst:
eine Generatorsteuerungseinheit (120), die einen Spannungsregulator (125) umfasst;
einen Generator (130);
eine Sammelschienen-Leistungssteuerungseinheit (110) in Kommunikation mit der Generatorsteuerungseinheit; und
einen Kontaktgeber (140),
wobei die Sammelschienen-Leistungssteuerungseinheit so konfiguriert ist, dass sie, zu einer ersten Zeit T1, eine Anfrage erhält, die bestimmte elektrische Last einzuschalten, wobei die bestimmte elektrische Last einen Einschaltstrom umfasst, um zu bewirken, dass die Generatorausgangsspannung eine vorübergehende Spannungsgrenze überschreitet,
wobei die Sammelschienen-Leistungssteuerungseinheit so konfiguriert ist, dass sie, zu einer zweiten Zeit T2, Kommunikationssignale, die angeben, dass die bestimmte elektrische Last innerhalb einer erwarteten Zeit TX angelegt wird, überträgt,
wobei die Generatorsteuerungseinheit so konfiguriert ist, dass sie die Kommunikationssignale, die angeben, dass die bestimmte elektrische Last innerhalb einer erwarteten Zeit TX angelegt wird, empfängt;
wobei der Spannungsregulator der Generatorsteuerungseinheit so konfiguriert ist, dass er einen Sollwert ändert, um einen geänderten Sollwert zu erzeugen, als Reaktion auf die Kommunikationssignale,
wobei der Spannungsregulator der Generatorsteuerungseinheit so konfiguriert ist, dass er eine Veränderung des geänderten Sollwerts umsetzt,
wobei der Generator so konfiguriert ist, dass er die Generatorausgangsspannung an den geänderten Sollwert anpasst, um eine angepasste Generatorausgangsspannung zu erzeugen;
wobei die Sammelschienen-Leistungssteuerungseinheit so konfiguriert ist, dass sie einen Befehl, den Kontaktgeber zu schließen, überträgt; und
wobei der Generator so konfiguriert ist, dass er die angepasste Generatorausgangsspannung einer bestimmten elektrischen Last basierend auf einem Schließvorgang des Kontaktgebers bereitstellt, wobei der Schließvorgang in Übereinstimmung mit einer Verzögerung zwischen dem Empfangen des Befehls und dem tatsächlichen Schließen und Abschwächen des Einschaltstroms erfolgt.

10. System nach Anspruch 9, wobei das Umsetzen der Veränderung des geänderten Sollwerts das Umsetzen eines linearen Anstiegs in Bezug auf das Entfernen der angepassten Generatorausgangsspannung beinhaltet.

11. System nach Anspruch 9 oder 10, wobei die Sammelschienen-Leistungssteuerungseinheit eine Anfrage, die bestimmte elektrische Last einzuschalten, zu der ersten Zeit empfängt.

12. System nach Anspruch 11, wobei die Generatorsteuerungseinheit die Kommunikationssignale, die die bestimmte spezifische Last identifiziert, zu der zweiten Zeit empfängt, und
wobei die erste und die zweite Zeit vor der erwarteten Zeit auftreten.

## Revendications

1. Procédé de modification d'une tension de sortie d'un générateur en prévision d'un changement par rapport à une charge électrique spécifique, le procédé étant **caractérisé en ce qu'**il comprend :
la réception, à un premier instant T1, par une unité de commande de puissance de bus BPCU (110), d'une demande d'allumage de la charge électrique spécifique comprenant un courant d'appel pour amener la tension de sortie d'un générateur à dépasser une limite de tension transitoire ;
la transmission, à un deuxième instant T2, par l'unité de commande de puissance de bus, de signaux de communication indiquant que la charge électrique spécifique sera appliquée au cours d'une période prévue TX ;
la réception, au niveau d'une unité de commande de générateur CGU (120), des signaux de communication indiquant que la charge électrique spécifique sera appliquée au cours d'une période prévue TX ;
la modification, par un régulateur de tension (125) de l'unité de commande de générateur (120), d'un point de consigne pour produire un point de consigne modifié en réponse aux signaux de communication ;
la mise en œuvre, par le régulateur de tension, d'un changement du point de consigne modifié ;
la mise en correspondance de la tension de sortie d'un générateur avec le point de consigne modifié pour produire une tension de sortie d'un générateur mise en correspondance ; la transmission, par l'unité de commande de puissance de bus en communication avec l'unité de commande de générateur, d'une commande de fermeture d'un contacteur (140) ; et
la fourniture de la tension de sortie d'un générateur mise en correspondance à la charge électrique spécifique (150) sur la base d'une opération de fermeture du contacteur, l'opération de fermeture étant conforme à un délai entre la réception de la commande et une fermeture effective et l'atténuation du courant d'appel.

2. Procédé selon la revendication 1, dans lequel la mise en œuvre du changement du point de consigne modifié comporte la mise en œuvre d'une augmentation linéaire par rapport à la suppression de la tension de sortie d'un générateur mise en correspondance.

3. Procédé selon une quelconque revendication précédente, dans lequel l'unité de commande de puissance de bus (110) reçoit une demande d'allumage de la charge électrique spécifique au premier instant.

4. Procédé selon la revendication 3,
dans lequel l'unité de commande de générateur (120) reçoit les signaux de communication identifiant la charge électrique spécifique au deuxième instant, et
dans lequel le premier et le deuxième instants se produisent avant l'instant prévu.

5. Procédé selon la revendication 4, dans lequel les signaux de communication provenant de l'unité de commande de puissance de bus sont en réponse à une demande d'application de la charge électrique spécifique.

6. Procédé selon la revendication 4, dans lequel les signaux de communication provenant de l'unité de commande de puissance de bus sont en réponse à une demande de suppression de la charge électrique spécifique.

7. Procédé selon la revendication 3, dans lequel l'unité de commande de puissance de bus ouvre et ferme le contacteur (140) conformément à l'application ou à la suppression de la tension de sortie d'un générateur.

8. Procédé selon une quelconque revendication précédente, dans lequel l'unité de commande de générateur identifie la charge électrique spécifique à un deuxième instant, et
dans lequel le premier et le deuxième instants se produisent avant l'instant prévu.

9. Système de modification d'une tension de sortie d'un générateur en prévision d'un changement par rapport à une charge électrique spécifique, le système étant **caractérisé en ce qu'**il comprend :
une unité de commande de générateur (120) comprenant un régulateur de tension (125) ;
un générateur (130) ;
une unité de commande de puissance de bus (110) en communication avec l'unité de commande de générateur ; et
un contacteur (140),
dans lequel l'unité de commande de puissance de bus est conçue pour recevoir, à un premier instant T1, une demande d'allumage de la charge électrique spécifique, la charge électrique spécifique comprenant un courant d'appel pour amener la tension de sortie d'un générateur à dépasser une limite de tension transitoire,
dans lequel l'unité de commande de puissance de bus est conçue pour transmettre, à un deuxième instant T2, des signaux de communication indiquant que la charge électrique spécifique sera appliquée au cours d'une période prévue TX ;
dans lequel l'unité de commande de générateur est conçue pour recevoir lesdits signaux de communication indiquant que la charge électrique spécifique sera appliquée au cours d'une période prévue TX ;
dans lequel le régulateur de tension de l'unité de commande de générateur est conçu pour modifier un point de consigne afin de produire un point de consigne modifié en réponse aux signaux de communication,
dans lequel le régulateur de tension de l'unité de commande de générateur est conçu pour mettre en œuvre un changement du point de consigne modifié,
dans lequel le générateur est conçu pour mettre en correspondance la tension de sortie d'un générateur avec le point de consigne modifié afin de produire une tension de sortie d'un générateur mise en correspondance ;
dans lequel l'unité de commande de puissance de bus est conçue pour transmettre une commande pour fermer le contacteur ; et
dans lequel le générateur est conçu pour fournir la tension de sortie d'un générateur mise en correspondance à une charge électrique spécifique sur la base d'une opération de fermeture du contacteur, l'opération de fermeture étant conforme à un délai entre la réception de la commande et une fermeture effective et l'atténuation du courant d'appel.

10. Système selon la revendication 9, dans lequel la mise en œuvre du changement du point de consigne modifié comporte la mise en œuvre d'une augmentation linéaire par rapport à la suppression de la tension de sortie d'un générateur mise en correspondance.

11. Système selon la revendication 9 ou 10, dans lequel l'unité de commande de puissance de bus reçoit une demande d'allumage de la charge électrique spécifique au premier instant.

12. Système selon la revendication 11, dans lequel l'unité de commande de générateur reçoit les signaux de communication identifiant la charge électrique spécifique au deuxième instant, et
dans lequel le premier et le deuxième instants se produisent avant l'instant prévu.
